# EUROPÄISCHE PATENTSCHRIFT

(11) **EP 2 717 651 B1**
(45) Veröffentlichungstag und Bekanntmachung des Hinweises auf die Patenterteilung: **05.08.2020**
(21) Anmeldenummer: 13185857.3
(22) Anmeldetag: 25.09.2013
(51) Int. Cl.: H05B 3/74, H05B 6/06, H05B 6/12, C03C 17/34

(54) **Hausgerätevorrichtung**
Domestic appliance
Dispositif d'appareil ménager

(30) Priorität: 03.10.2012 ES 201231529
(43) Veröffentlichungstag der Anmeldung: 09.04.2014
(73) Patentinhaber: BSH Hausgeräte GmbH, 81739 München (DE)
(72) Erfinder: Alaman Aguilar, Jorge, 50008 Zaragoza (ES); Alonso Esteban, Rafael, 22004 Huesca (ES); Bunuel Magdalena, Miguel Angel, 50017 Zaragoza (ES); Carretero Chamarro, Enrique, 50003 Zaragoza (ES); Escartin Barduzal, Andres, 50019 Zaragoza (ES); Ester Sola, Francisco Javier, 50001 Zaragoza (ES); Pelayo Zueco, Francisco Javier, 50008 Zaragoza (ES); Perez Cabeza, Pilar, 50008 Zaragoza (ES); Planas Layunta, Fernando, 50009 Zaragoza (ES); Subias Domingo, Jesus Mario, 50008 Zaragoza (ES); Villuendas Yuste, Francisco, 50009 Zaragoza (ES)

(56) Entgegenhaltungen:
- EP-A1- 1 505 354
- EP-A1- 2 233 840
- WO-A1-2011/020718
- WO-A1-2012/085821
- WO-A2-2013/001414
- US-A1- 2010 181 302

## Beschreibung

Die Erfindung geht aus von einer Kochfeldvorrichtung nach dem Oberbegriff des Anspruchs 1.

Es sind Kochfelder bekannt, die zu Zwecken der Farbgebung eine Vielschichtbeschichtung aufweisen. Diese bestehen aus Schichten metallischen und isolierenden Materials.

Die Aufgabe der Erfindung besteht insbesondere darin, eine gattungsgemäße Vorrichtung mit verbesserter Haltbarkeit und hoher Kompatibilität mit der Benutzerschnittstelle (UI) bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Kochfeldvorrichtung, insbesondere einer Induktionskochfeldvorrichtrung, mit zumindest einer Glaseinheit und zumindest einer als Vielschichtstruktur ausgebildeten Beschichtung, die auf zumindest einem Teilbereich zumindest einer Hauptfläche, insbesondere einer Rückseite, der Glaseinheit angeordnet ist und die zumindest zwei, insbesondere zumindest vier, vorteilhaft zumindest sechs, vorzugsweise zumindest acht, Schichten aufweist.

Es wird vorgeschlagen, dass zumindest eine, insbesondere zumindest zwei, vorteilhaft zumindest drei, der Schichten von zumindest einem halbleitenden Material gebildet sind. Unter einer "Glaseinheit" soll insbesondere eine Einheit verstanden werden, die zu einem Großteil, insbesondere zu mindestens 50 %, vorteilhaft zu mindestens 70 %, vorzugsweise zu mindestens 90 %, von einem glasartigen Material gebildet ist. Unter einem "glasartigen" Material soll insbesondere ein zumindest teilweise amorphes, insbesondere transparentes, vorzugsweise anorganisches, Material verstanden werden. Insbesondere ist das glasartige Material von einer Glaskeramik und/oder Borosilikatglas gebildet. Insbesondere weist die Glaseinheit eine Transparenz von zumindest 50 %, vorteilhaft zumindest 70%, vorzugsweise von zumindest 90 %, auf. Unter "Transparenz" soll insbesondere Transparenz zumindest im Bereich des sichtbaren Lichts, insbesondere zumindest im Wellenlängenbereich zwischen 450 nm und 720 nm, verstanden werden.

Insbesondere unterscheidet sich die Glaseinheit von einer transluzenten Glaseinheit. Vorzugsweise ist die Glaseinheit als Platteneinheit, insbesondere als Kochfeldplatteneinheit, ausgebildet. Unter einer "Platteneinheit" soll insbesondere eine Einheit verstanden werden, die eine Dicke aufweist, die maximal 20 %, insbesondere maximal 10 %, vorteilhaft maximal 5 %, vorzugsweise maximal 1 %, einer zweitlängsten Seite aufweist. Unter einer "Dicke" einer Einheit soll insbesondere eine kürzeste Kantenlänge eines kleinsten Quaders verstanden werden, der die Einheit komplett umgibt. Unter einer "zweitlängsten Seite" der Einheit soll insbesondere eine zweitlängste Kantenlänge des kleinsten Quaders verstanden werden, der die Einheit komplett umgibt. Unter einer "Kochfeldplatteneinheit" soll insbesondere eine Platteneinheit verstanden werden, die dazu vorgesehen ist, Gargeschirr, insbesondere einen Topf, eine Pfanne und/oder Ähnliches, während einer Erwärmung zu tragen, wobei ein Energietransport zu dem Gargefäß vorzugsweise durch die Platteneinheit hindurch erfolgt. Insbesondere weist die Kochfeldplatte eine hohe Temperaturbeständigkeit, insbesondere zumindest bis 100 °C, vorteilhaft zumindest bis 200 °C, vorzugsweise zumindest bis 300 °C, auf. Insbesondere weist ein Material der Kochfeldplatteneinheit einen betragsmäßig niedrigen linearen Wärmeausdehnungskoeffizienten, insbesondere kleiner als 1•10⁻⁶ m/(m•K), vorteilhaft kleiner als 0,5•10⁻⁶ m/(m•K), vorzugsweise kleiner als 0,1•10⁻⁶ m/(m•K), auf. Unter einer "Vielschichtstruktur" soll insbesondere eine Folge von zumindest zwei, insbesondere zumindest drei, vorteilhaft zumindest vier, vorzugsweise zumindest fünf, Schichten verstanden werden. Insbesondere ist dabei eine Dicke einer dünnsten Schicht der Vielschichtstruktur größer als 0,5 %, insbesondere größer als 1 %, vorteilhaft größer als 2 %, besonders vorteilhaft größer 5 %, vorzugsweise größer als 10 %, einer Dicke einer dicksten Schicht der Vielschichtstruktur. Insbesondere weist jede Schicht der Vielschichtstruktur eine Dicke auf, die kleiner ist als 2 µm, insbesondere kleiner ist als 1,5 µm, vorzugsweise kleiner ist als 1 µm, und insbesondere größer ist als 1 nm, vorteilhaft größer ist als 2 nm, vorzugsweise größer ist als 4 nm. Insbesondere weist die Vielschichtstruktur eine Dicke auf, die kleiner ist als 2 µm, insbesondere kleiner ist als 1,5 µm, vorzugsweise kleiner ist als 1 µm, und insbesondere größer ist als 3 nm, vorteilhaft größer ist als 6 nm, vorzugsweise größer ist als 9 nm. Vorzugsweise liegt eine erste Schicht der Vielschichtstruktur direkt an der Glaseinheit an. Unter einem "Teilbereich" soll zumindest eine, insbesondere genau eine, zusammenhängende Fläche verstanden werden, die durch zumindest eine, insbesondere genau eine, geschlossene Linie beschränkt ist. Unter einer "Hauptfläche" der Glaseinheit soll insbesondere eine durchgehende, vorzugsweise knickfreie Fläche verstanden werden, die zumindest 20 %, insbesondere zumindest 30 %, vorteilhaft zumindest 40 %, vorzugsweise zumindest 45 %, einer Gesamtoberfläche der Glaseinheit ausmacht. Vorzugsweise liegt die Hauptfläche zumindest im Wesentlichen in einer Ebene. Unter der "Rückseite" der Glaseinheit soll insbesondere eine Seite der Glaseinheit verstanden werden, die sich von einer Seite der Glaseinheit unterscheidet, die einem Bediener in einem Betriebszustand der Hausgerätevorrichtung direkt zugänglich ist. Insbesondere kann es sich dabei um eine Unterseite einer Kochfeldplatte handeln. Unter einem "halbleitenden Material" soll insbesondere ein Material, insbesondere eine Legierung oder ein Reinstoff, verstanden werden, das eine Bandlücke von zumindest 0,01 eV, insbesondere zumindest 0,03 eV, vorteilhaft zumindest 0,1 eV, vorzugsweise zumindest 0,15 eV, aufweist. Insbesondere entstammt das halbleitende Material der Gruppe Ge, Si, SiAl, InAs, GaAs, InSb, GaSb und/oder Legierungen davon. Unter "vorgesehen" soll insbesondere speziell ausgeformt, ausgelegt und/oder ausgestattet verstanden werden. Vorzugsweise sind die Schichten der Vielschichtstruktur mittels eines PVD-Verfahrens, insbesondere Magnetron-Sputtern, aufgebracht. Insbesondere ist die Beschichtung zu einer Farbgebung der Glaseinheit vorgesehen. Es kann insbesondere eine verbesserte Haltbarkeit und/oder eine hohe Temperaturresistenz erreicht werden. Insbesondere kann eine erhöhte Flexibilität hinsichtlich einer erreichbaren Farbgebung der Beschichtung erreicht werden. Zudem kann eine möglichst gute Kompatibilität mit den Ul-Sensoren erzielt werden, ohne dass eine nachträgliche Bearbeitung bei der Herstellung benötigt wird.

Weiterhin wird vorgeschlagen, dass die Beschichtung neben der zumindest einen Schicht, die von einem halbleitenden Material gebildet ist, lediglich Schichten halbleitenden Materials und/oder isolierenden Materials aufweist. Unter einem "isolierenden" Material soll insbesondere ein Material verstanden werden, dass eine Bandlücke von zumindest 3 eV aufweist. Insbesondere ist das isolierende Material ein Material der Gruppen der Oxide und/oder Nitride von Sn, Zn, Ti, Al, Si, Nb, Ta und/oder Legierungen davon. Insbesondere weisen Schichten isolierenden Materials eine Transparenz von zumindest 50 %, insbesondere zumindest 70 %, vorteilhaft zumindest 90 %, auf. Insbesondere ist zumindest eine abschließende Schicht der Vielschichtstruktur von einem isolierenden Material gebildet, um einen chemischen Einfluss von umgebender Luft auf die Schicht halbleitenden Materials zu minimieren. Unter einer "abschließenden" Schicht der Vielschichtstruktur soll insbesondere eine Schicht der Vielschichtstruktur verstanden werden, deren Distanz zur Glaseinheit unter allen Schichten der Vielschichtstruktur maximal ist. Insbesondere unterscheiden sich Materialien aller Schichten der Beschichtung von leitenden, insbesondere metallischen, Materialien. Es kann insbesondere eine verbesserte Haltbarkeit erreicht werden, da eine Gefahr einer chemischen Veränderung verringert wird. Insbesondere kann erreicht werden, dass Touchbedienelemente in einem Bereich der Beschichtung anordnenbar und nutzbar sind ohne dass weiterer Aufwand betrieben werden muss. Dies ist der wesentliche Grund, warum Halbleiter statt Metalle verwendet werden.

Ferner wird vorgeschlagen, dass die Beschichtung zumindest eine Schicht elektrisch isolierenden Materials aufweist, die zwischen zumindest zwei Schichten, die von halbleitenden Material gebildet sind, angeordnet ist. Insbesondere ist es denkbar, dass die Beschichtung zwei unmittelbar aufeinander folgende Schichten unterschiedlichen elektrisch isolierenden Materials aufweist, die zwischen zumindest zwei Schichten halbleitenden Materials oder zwischen der Glaseinheit und einer halbleitenden Schicht angeordnet ist. Es kann insbesondere eine hohe Flexibilität hinsichtlich einer erreichbaren Farbgebung erreicht werden.

Vorteilhaft wird vorgeschlagen, dass die Beschichtung eine Transparenz von maximal 20 %, insbesondere maximal 10 %, vorteilhaft maximal 5 %, aufweist. Insbesondere weist die Beschichtung eine Transparenz von zumindest 0,5 %, insbesondere zumindest 1 %, vorteilhaft zumindest 2 %, vorzugsweise zumindest 4 %, auf. Es kann insbesondere ein Einblick in die Kochfeldvorrichtung von außen verwehrt werden, wobei insbesondere Durchleuchten mittels Leuchteinheiten, insbesondere LEDs, von innen nach außen weiterhin möglich bleibt.

Weiterhin wird vorgeschlagen, dass das Vielschichtsystem eine Dicke von maximal 10 µm, insbesondere maximal 3 µm, vorzugsweise maximal 1 µm, aufweist. Es kann insbesondere eine Materialersparnis und/oder eine Zeitersparnis erreicht werden.

Ferner wird vorgeschlagen, dass die Beschichtung dazu vorgesehen ist, einen metallischen Anschein zu erzeugen. Darunter, dass die Beschichtung einen "metallischen Anschein erzeugt", soll insbesondere verstanden werden, dass die Beschichtung so wirkt, als wäre sie von einem Metall gebildet. Insbesondere weist die Beschichtung eine metallisch wirkende Färbung auf. Unter einer "metallisch wirkenden Färbung" soll insbesondere eine Färbung verstanden werden, die eine Reflektivität zwischen 15 % und 80 %, insbesondere zwischen 20 % und 70 %, vorzugsweise zwischen 25 % und 60 %, aufweist. Insbesondere kann eine "metallisch schwarze" Färbung erzielt werden, wobei eine Reflektivität im sichtbaren Frequenzbereich kleiner ist als 15 %, insbesondere kleiner ist als 10 %. Insbesondere kann eine "edelstahlfarbene" Färbung erzielt werden, wobei eine Reflektivität im sichtbaren Frequenzbereich zwischen 20 % und 60 % liegt und Farbkoordinaten im L*a*b*-Farbraum für a* und b* Werte aufweisen, die betragsmäßig kleiner sind als 10. Insbesondere kann eine "farbig metallische" Färbung erzielt werden, wobei die Farbkoordinaten im L*a*b*-Farbraum für a* und b* Werte aufweist, die betragsmäßig größer sind als 10. Es kann insbesondere eine Komfortsteigerung erreicht werden.

Weiterhin wird vorgeschlagen, dass die Kochfeldvorrichtung zumindest eine Elektronikeinheit aufweist, die dazu vorgesehen ist, zumindest eine elektrische Kenngröße zumindest der einen Schicht, die von einem halbleitenden Material gebildet ist, zu messen und auszuwerten. Insbesondere weist die Elektronikeinheit zumindest eine Steuereinheit auf. Unter einer "Steuereinheit" soll insbesondere eine elektronische Einheit verstanden werden, die vorzugsweise in einer Steuer- und/oder Regeleinheit eines Kochfelds zumindest teilweise integriert ist. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Insbesondere umfasst die Elektronikeinheit zumindest eine Sensoreinheit, insbesondere zumindest einen Widerstandsensor, der dazu vorgesehen ist, einen Widerstand der Schicht halbleitenden Materials zu bestimmen. Insbesondere ist die Elektronikeinheit dazu vorgesehen ist, zumindest einen Sicherheitsparameter zu erfassen. Unter einem Sicherheitsparameter soll insbesondere ein Parameter verstanden werden, der für eine Sicherheit eines Bedieners relevant ist. Insbesondere ist die Elektronikeinheit dazu vorgesehen, eine Intaktheit der Glaseinheit und/oder eine Temperatur der Glaseinheit festzustellen. Insbesondere ist die Elektronikeinheit dazu vorgesehen, in Abhängigkeit von einer Größe der elektrischen Kenngröße eine Aktion, insbesondere eine Notabschaltung, durchzuführen. Insbesondere ist die Elektronikeinheit dazu vorgesehen, die elektrischen Kenngrößen mehrerer halbleitender Schichten zu messen, wobei sich insbesondere Messstrecken der unterschiedlichen Schichten halbleitenden Materials in Projektion auf die Glaseinheit kreuzen. Es kann insbesondere eine hohe Sicherheit erreicht werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen in schematischer Darstellung
- Fig. 1: ein erfindungsgemäßes Kochfeld in einer Ansicht von oben,
- Fig. 2: einen Schnitt entlang der Linie II-II in Figur 1,
- Fig. 3: ein Transmissivitäts-/Reflektivitätsspektrum eines ersten Ausführungsbeispiels,
- Fig. 4: ein Transmissivitäts-/Reflektivitätsspektrum eines zweiten Ausführungsbeispiels,
- Fig. 5: ein Transmissivitäts-/Reflektivitätsspektrum eines dritten Ausführungsbeispiels,
- Fig. 6: ein Transmissivitäts-/Reflektivitätsspektrum eines vierten Ausführungsbeispiels,
- Fig. 7: ein Transmissivitäts-/Reflektivitätsspektrum eines fünften Ausführungsbeispiels und
- Fig. 8: einen Vergleich der Transmissivitäten T3, T4 aus dem dritten und vierten Ausführungsbeispiel.

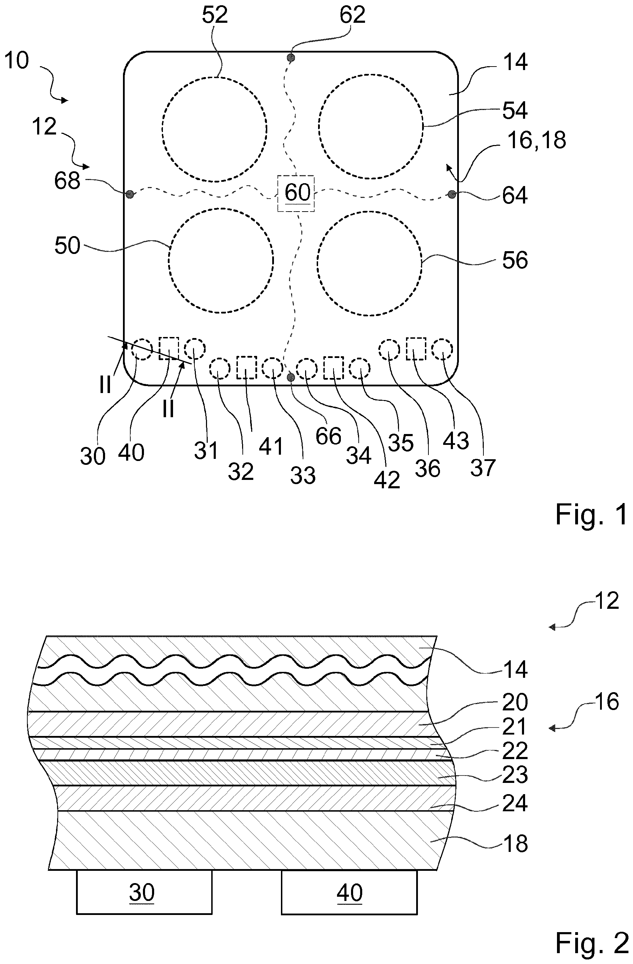

Figur 1 zeigt ein als Induktionskochfeld ausgebildetes Kochfeld 10 mit einer als Induktionskochfeldvorrichtung ausgebildeten Kochfeldvorrichtung 12. Die Kochfeldvorrichtung 12 weist eine als Kochfeldplatteneinheit ausgebildete Glaseinheit 14 auf. Die Glaseinheit 14 weist vier, mittels Markierungen 50, 52, 54, 56 gekennzeichnete Kochzonen auf. Die Markierungen 52, 54, 56, 58 sind als Serigraphien ausgebildet, können alternativ aber auch als Laserinnengravur in der Glaseinheit 14 oder ähnliches ausgebildet sein. Die Kochfeldvorrichtung 12 weist weiterhin vier Induktoren auf, die auf einer, einem Bediener abgewandten Seite der Glaseinheit 14 angeordnet sind. Die Induktoren sind unter den Kochzonen angeordnet. Weiterhin weist die Kochfeldvorrichtung 12 eine als Vielschichtstruktur ausgebildete Beschichtung 16 auf, die auf einer kompletten Rückseite der Glaseinheit 14 angeordnet ist. Weiterhin weist die Beschichtung 16 fünf Schichten 20, 21, 22, 23, 24 auf. Die Schichten 20, 21, 22, 23, 24 sind abwechselnd von halbleitenden und isolierenden Materialien gebildet (Figur 2). Weiterhin weist die Kochfeldvorrichtung 12 acht berührungsempfindliche Sensoren 30, 31, 32, 33, 34, 35, 36, 37 auf, die an der Rückseite der Glaseinheit 14 hinter der Beschichtung 16 angeordnet sind. Die berührungsempfindlichen Sensoren 30, 31, 32, 33, 34, 35, 36, 37 sind dazu vorgesehen, Heizleistungen der Induktoren einzustellen. Weiterhin weist die Kochfeldvorrichtung 12 vier als Segmentanzeigen ausgebildete Anzeigeeinheiten 40, 41, 42, 43 auf. Die Anzeigeeinheiten 40, 41, 42, 43 sind auf einer Rückseite der Glaseinheit 14 hinter der Beschichtung 16 angeordnet. Die Anzeigeeinheiten 40, 41, 42, 43 sind jeweils zwischen zwei berührungsempfindlichen Sensoren 30, 31, bzw. 32, 33, bzw. 34, 35, bzw. 36, 37 angeordnet. Die Anzeigeeinheiten 40, 41, 42, 43 sind jeweils dazu vorgesehen, den Heizzonen zugeordnete Heizleistungen in Form von Leistungsstufen darzustellen. Die Beschichtung 16 erstreckt sich hierbei sowohl über einen Bereich, in dem die Heizzonen angeordnet sind, als auch einen Bedienerschnittstellenbereich, in dem die Anzeigeeinheiten 40, 41, 42, 43 und die berührungsempfindlichen Sensoren 30, 31, 32, 33, 34, 35, 36, 37 angeordnet sind.

Figur 2 zeigt einen Schnitt durch die Glaseinheit 14, wobei ein berührungsempfindlicher Sensor 30 und eine Anzeigeeinheit 40 geschnitten sind. Die Beschichtung 16 weist lediglich Schichten 20, 21, 22, 23, 24 halbleitenden Materials und/oder isolierenden Materials auf. An die aus transparenter Glaskeramik gebildete Glaseinheit 14 schließt sich eine erste Schicht 20 an. Die erste Schicht 20 ist von einem isolierenden Material gebildet. Die erste Schicht 20 ist von Siliziumaluminiumnitrid (SiAlNₓ) gebildet. Die erste Schicht 20 weist eine Dicke von 70 nm auf. An die erste Schicht 20 schließt sich eine zweite Schicht 21 an. Die zweite Schicht 21 ist von einem halbleitenden Material gebildet. Die zweite Schicht 21 ist von Germanium gebildet. Die zweite Schicht 21 weist eine Dicke von 8 nm auf. An die zweite Schicht 21 schließt sich eine dritte Schicht 22 an. Die dritte Schicht 22 ist von einem isolierenden Material gebildet. Die dritte Schicht 22 ist von Siliziumaluminiumnitrid gebildet. Die dritte Schicht 22 weist eine Dicke von 30 nm auf. An die dritte Schicht 22 schließt sich eine vierte Schicht 23 an. Die vierte Schicht 23 ist von einem halbleitenden Material gebildet. Die vierte Schicht 21 ist von Germanium gebildet. Die vierte Schicht 23 weist eine Dicke von 60 nm auf. An die vierte Schicht 23 schließt sich eine fünfte, abschließende Schicht 24 an. Die abschließende Schicht 24 ist von einem isolierenden Material gebildet. Die abschließende Schicht 21 ist von Siliziumaluminiumnitrid gebildet. Die abschließende Schicht 24 weist eine Dicke von 50 nm auf. Die Beschichtung 16 weist also eine dritte Schicht 22 elektrisch isolierenden Materials auf, die zwischen zwei Schichten 21, 23, die von halbleitendem Material gebildet sind, angeordnet ist. Weiterhin weist die Beschichtung 16 zwei Schichten 21, 23 auf, die jeweils unmittelbar zwischen zwei Schichten 20, 22 bzw. 22, 24 isolierenden Materials angeordnet sind. Die Schichten 20, 21, 22, 23, 24 der Beschichtung 16 sind durch Magnetron-Sputtern, einem PVD-Verfahren, aufgebracht. Die als Vielschichtstruktur ausgebildete Beschichtung 16 ist von einer Schutzbeschichtung 18, die von einem transparenten Acryllack gebildet ist, überdeckt. Die Schutzbeschichtung 18 weist eine Dicke von 200 µm auf. Die Schutzbeschichtung 18 dient einem mechanischen Schutz der als Vielschichtstruktur ausgebildeten Beschichtung 16.

Die als Serigrafien ausgebildeten Markierungen 50, 52, 54, 56 sind auf einer Unterseite der Glaseinheit 14 angeordnet. Die Markierungen 50, 52, 54, 56 sind vor der Beschichtung 16 aufgebracht, so dass die erste Schicht 20 im Bereich der Markierungen 50, 52, 54, 56 an die Markierung 50, 52, 54, 56 statt an die Glaseinheit 14 anschließt. Dies führt zu einer guten Sichtbarkeit der Markierungen 50, 52, 54, 56.

Weiterhin weist die Kochfeldvorrichtung 12 eine Elektronikeinheit 60 auf, die dazu vorgesehen ist, Widerstände der beiden Schichten 21, 23 halbleitenden Materials zu messen und auszuwerten. Die Elektronikeinheit 60 ist dazu vorgesehen, einen Widerstand der zweiten Schicht 21 zwischen einem Kontakt 68 am linken Rand der Glaseinheit 14 und einem Kontakt 64 am rechten Rand der Glaseinheit 14 zu messen. Die Elektronikeinheit 60 ist dazu vorgesehen, einen Widerstand der vierten Schicht 23 zwischen einem Kontakt 62 am hinteren Rand der Glaseinheit 14 und einem Kontakt 66 am vorderen Rand der Glaseinheit 14 zu messen. Die Elektronikeinheit 60 ist dazu vorgesehen, durch Auswertung der elektrischen Kenngröße, Sicherheitsparameter zu erfassen. Die Elektronikeinheit 60 ist dazu vorgesehen, eine mittlere Temperatur der Glaseinheit 14 zu erfassen. Weiterhin ist die Elektronikeinheit 60 dazu vorgesehen, einen Bruch der Glaseinheit 14 zu erfassen. Die Elektronikeinheit 60 ist dazu vorgesehen, bei Überschreitung einer Grenztemperatur eine Leistungsreduzierung bzw. bei einem Bruch der Glaseinheit 14 eine Notabschaltung durchzuführen.

Der berührungsempfindliche Sensor 30 ist direkt an der Schutzbeschichtung 18 angeordnet. Die Schutzbeschichtung 18 verhindert bei einer Montage des berührungsempfindlichen Sensors 30 eine Beschädigung, wie beispielsweise ein Verkratzen, der Beschichtung 16. Der berührungsempfindliche Sensor 30 ist an die Schutzbeschichtung 18 angeklebt. Der berührungsempfindliche Sensor 30 ist als kapazitiver Sensor ausgebildet, der bei Annäherung beispielsweise eines Fingers eines Bedieners seine Kapazität verändert. Eine Messung findet dabei durch die Glaseinheit 14 hindurch statt. Da die Schichten 20, 21, 22, 23, 24 der Vielschichtstruktur aus isolierenden und halbleitenden Materialien gebildet sind, kann die Beschichtung 16 über dem berührungsempfindlichen Sensor 30 durchgehend ausgebildet sein. Die Anzeigeeinheit 40 weist von LEDs gebildete Segmente auf. Für die berührungsempfindlichen Sensoren 31, 32, 33, 34, 35, 36, 37 und die Anzeigeeinheiten 41, 42, 43 gilt hierbei gleiches wie für den berührungsempfindlichen Sensor 30 und die Anzeigeeinheit 40.

Weiterhin sind Anordnungen denkbar, in denen auf die Schutzbeschichtung 18 verzichtet ist und/oder in denen der berührungsempfindliche Sensor 30 direkt auf die Beschichtung 16 aufgebracht ist und/oder in denen der berührungsempfindliche Sensor 30 zwischen der Beschichtung 16 und der Schutzbeschichtung 18 angeordnet, insbesondere selber als Beschichtung ausgebildet ist.

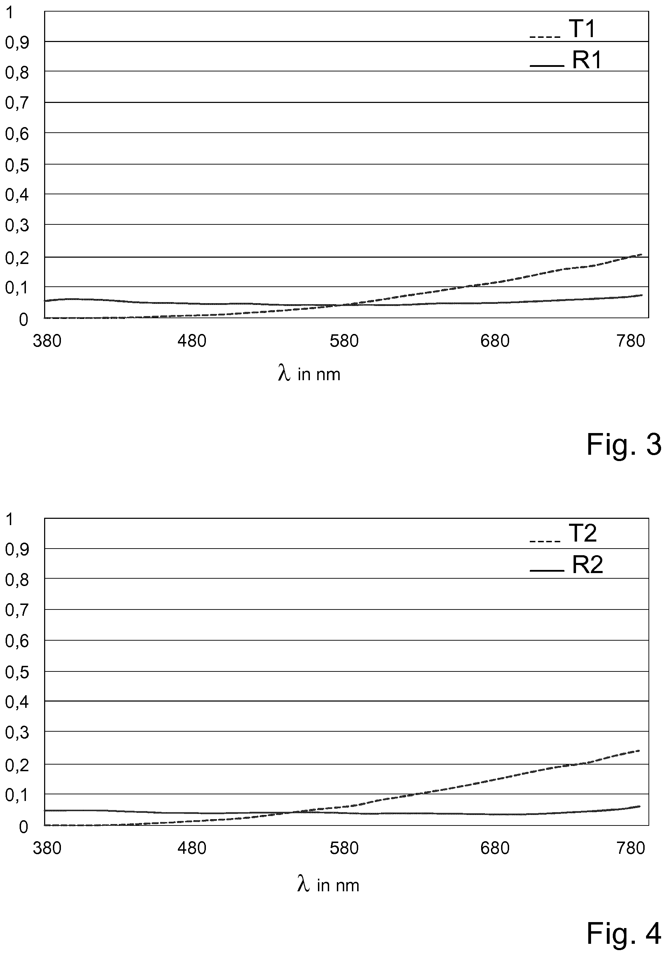

In Figur 3 ist ein Transmissivitäts-/Reflektivitätsspektrum für die beschriebene Beschichtung 16 dargestellt. Es sind eine Transmissivität T1 und eine Reflektivität R1 in Abhängigkeit von einer Wellenlänge λ dargestellt. Die Beschichtung 16 zusammen mit der Glaseinheit des Kochfeldes weist für den Spektralbereich zwischen 380 nm und 780 nm eine im Wesentlichen konstante Reflektivität von 6 % auf der Seite der Glaseinheit (diese ist unterschiedlich abhängig von der jeweiligen Seite) auf. Die Beschichtung 16 ist dazu vorgesehen, einen metallisch schwarzen Anschein zu wecken. Im L*a*b*-Farbraum liegt eine Farbe der Beschichtung 16 bei L* = 26,1, a* = 1,3, b* = -3,3. Weiterhin weist die Beschichtung eine im Spektralbereich zwischen 380 nm und 780 nm stetig von 0 % auf 20 % ansteigende Transmissivität T1 auf. Es resultiert eine sichtbare Transmissivität von 3,9 %. Licht von LEDs der Anzeigeeinheit 40 ist somit durch die Beschichtung 16 und die Schutzbeschichtung 18 hindurch sichtbar.

Weiterhin sind Ausgestaltungen denkbar, in denen auf die Rückseite oder eine Vorderseite der Glaseinheit 14 durch Laserbearbeitung und/oder Siebdruck erstellte Markierungen und/oder Zierelemente aufgebracht sind oder in denen durch Laserbearbeitung in der Glaseinheit 14 Markierungen eingebrannt sind.

In den Figuren 4 bis 8 sind Transmissivitäts-/Reflektivitätsspektren weiterer erfindungsgemäßer Ausgestaltungen dargestellt. Es sind jeweils die Transmissivität T2, T3, T4, T5 und die Reflektivität R2, R3, R4, R5 in Abhängigkeit von der Wellenlänge λ dargestellt. Es wird von einer gleichartigen Ausgestaltung der Kochfeldvorrichtung 12 wie in den Figuren 1 und 2 ausgegangen. Lediglich die Parameter der Beschichtung 16 unterscheiden sich.

In Figur 4 ist ein Transmissivitäts-/Reflektivitätsspektrum eines weiteren Ausführungsbeispiels dargestellt. Es sind eine Transmissivität T2 und eine Reflektivität R2 in Abhängigkeit von einer Wellenlänge λ dargestellt. Eine als Vielschichtstruktur ausgebildete Beschichtung ist hierbei von fünf Schichten gebildet, wobei diese abwechselnd von isolierenden und halbleitenden Materialien gebildet sind. Eine an die Glaseinheit anschließende erste Schicht, die von einem isolierenden Material gebildet ist, ist von 50 nm Siliziumaluminiumnitrid gebildet. Eine folgende zweite Schicht, die von halbleitendem Material gebildet ist, ist von 7 nm Germanium gebildet. Eine an die zweite Schicht anschließende dritte Schicht, die von einem isolierenden Material gebildet ist, ist von 20 nm Siliziumaluminiumnitrid gebildet. Eine an die dritte Schicht anschließende vierte Schicht, die von halbleitendem Material gebildet ist, ist von 51 nm Germanium gebildet. Eine auf die vierte Schicht folgende fünfte, abschließende Schicht, die von einem isolierenden Material gebildet ist, ist von 50 nm Siliziumaluminiumnitrid gebildet. Die Beschichtung ist dazu vorgesehen, einen schwarz metallischen Anschein zu erzeugen. Die Beschichtung zusammen mit der Glaseinheit des Kochfeldes weist für den Spektralbereich zwischen 380 nm und 780 nm eine im Wesentlichen konstante Reflektivität von 5 % auf der Seite der Glaseinheit auf. Im L*a*b*-Farbraum liegt eine Farbe der Beschichtung bei L* = 25,9, a* = 0,3, b* = -0,9. Weiterhin weist die Beschichtung eine im Spektralbereich zwischen 380 nm und 780 nm stetig von 0 % auf 25 % ansteigende Transmissivität auf. Es resultiert eine mittlere Transmissivität von 5,8 %. Licht von LEDs von Anzeigeeinheiten ist somit durch die Beschichtung hindurch sichtbar.

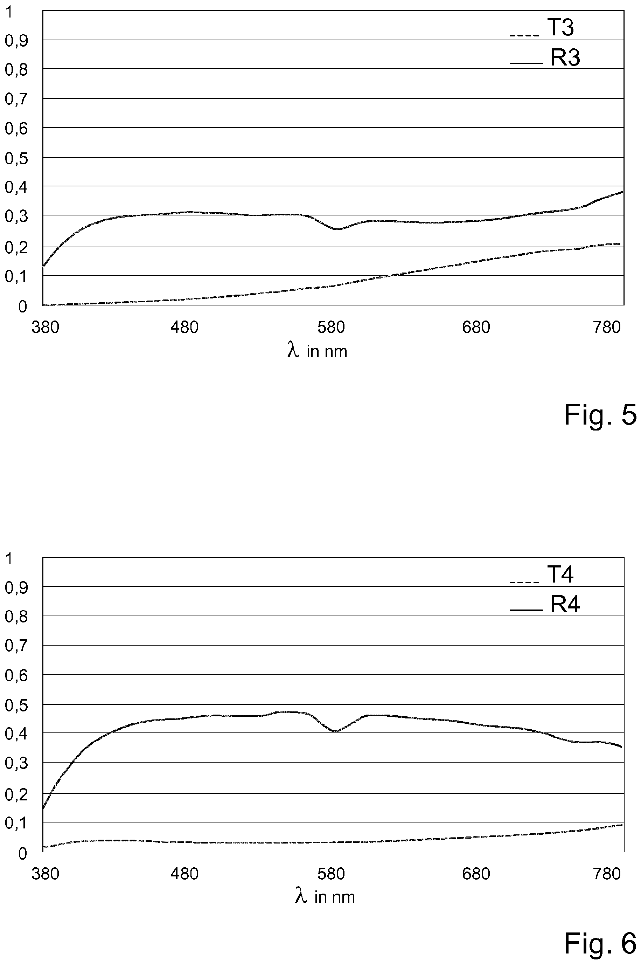

In Figur 5 ist ein Transmissivitäts-/Reflektivitätsspektrum eines weiteren Ausführungsbeispiels dargestellt. Es sind eine Transmissivität T3 und eine Reflektivität R3 in Abhängigkeit von einer Wellenlänge λ dargestellt. Eine als Vielschichtstruktur ausgebildete Beschichtung ist hierbei von zwei Schichten gebildet. Eine an die Glaseinheit anschließende erste Schicht, die von halbleitendem Material gebildet ist, ist von 60 nm Germanium gebildet. Eine an die erste Schicht anschließende zweite, abschließende Schicht, die von einem isolierenden Material gebildet ist, ist von 50 nm Siliziumaluminiumnitrid gebildet. Die Beschichtung ist dazu vorgesehen, einen edelstahlartigen metallischen Anschein zu erzeugen. Die Beschichtung zusammen mit der Glaseinheit des Kochfeldes weist für den Spektralbereich zwischen 420 nm und 740 nm eine im Wesentlichen konstante Reflektivität von 30 % auf der Seite der Glaseinheit auf. Im L*a*b*-Farbraum liegt eine Farbe der Beschichtung bei L* = 61,2, a* = -3,0, b* = -1,3. Weiterhin weist die Beschichtung eine im Spektralbereich zwischen 380 nm und 780 nm stetig von 0 % auf 20 % ansteigende Transmissivität auf. Es resultiert eine mittlere Transmissivität von 5,9 %. Licht von LEDs von Anzeigeeinheiten ist somit durch die Beschichtung hindurch sichtbar.

In Figur 6 ist ein Transmissivitäts-/Reflektivitätsspektrum eines weiteren Ausführungsbeispiels dargestellt. Es sind eine Transmissivität T4 und eine Reflektivität R4 in Abhängigkeit von einer Wellenlänge λ dargestellt. Eine als Vielschichtstruktur ausgebildete Beschichtung ist hierbei von vier Schichten gebildet, wobei diese abwechselnd von isolierenden und halbleitenden Materialien gebildet sind. Eine an die Glaseinheit anschließende erste Schicht ist von einem halbleitenden Material gebildet. Die erste Schicht ist von 25 nm Germanium gebildet. Eine an die erste Schicht anschließende zweite Schicht, die von einem isolierenden Material gebildet ist, ist von 80 nm Siliziumaluminiumnitrid gebildet. Eine an die zweite Schicht anschließende dritte Schicht, die von halbleitenden Material gebildet ist, ist von 15 nm Germanium gebildet. Eine auf die dritte Schicht folgende vierte, abschließende Schicht, die von einem isolierenden Material gebildet ist, ist von 50 nm Siliziumaluminiumnitrid gebildet. Die Beschichtung ist dazu vorgesehen, einen edelstahlartigen metallischen Anschein zu erzeugen. Die Beschichtung zusammen mit der Glaseinheit des Kochfeldes weist für den Spektralbereich zwischen 440 nm und 720 nm eine im Wesentlichen konstante Reflektivität von 45 % auf der Seite der Glaseinheit auf. Im L*a*b*-Farbraum liegt eine Farbe der Beschichtung bei L* = 73,2, a* = -2,5, b* = -2,4. Weiterhin weist die Beschichtung eine im Spektralbereich zwischen 440 nm und 730 nm im Wesentlichen konstante Transmissivität von 4 % auf. Licht von LEDs von Anzeigeeinheiten ist somit durch die Beschichtung hindurch sichtbar. Im Vergleich zum vorhergehenden Ausführungsbeispiel kann eine verbesserte Sichtbarkeit von blauen und grünen LEDs erreicht werden.

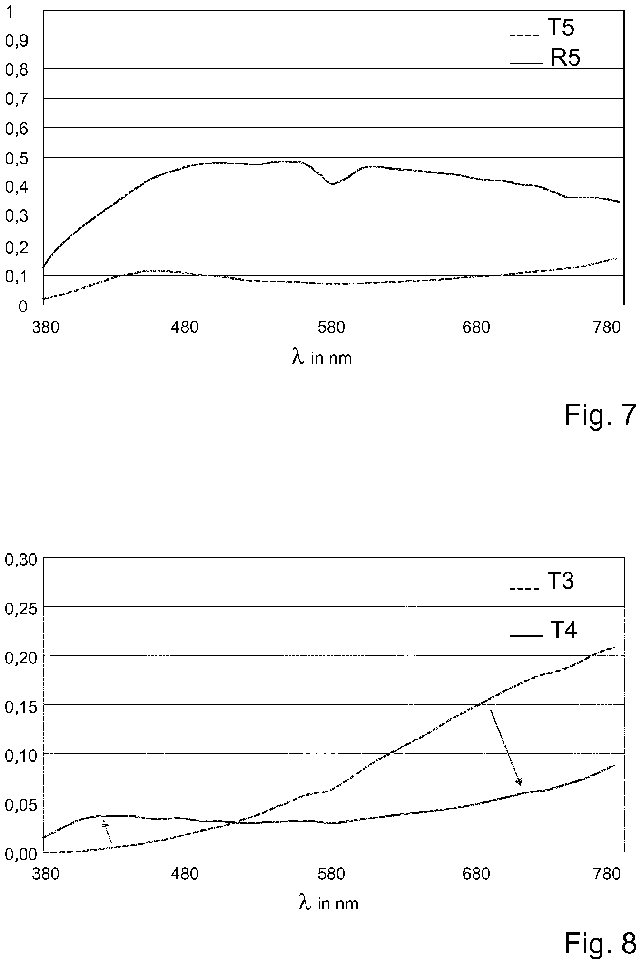

In Figur 7 ist ein Transmissivitäts-/Reflektivitätsspektrum eines weiteren Ausführungsbeispiels dargestellt. Es sind eine Transmissivität T5 und eine Reflektivität R5 in Abhängigkeit von einer Wellenlänge λ dargestellt. Eine als Vielschichtstruktur ausgebildete Beschichtung ist hierbei von vier Schichten gebildet, wobei diese abwechselnd von isolierenden und halbleitenden Materialien gebildet sind. Eine an die Glaseinheit anschließende erste Schicht ist von einem halbleitenden Material gebildet. Die erste Schicht ist von 20 nm Germanium gebildet. Eine an die erste Schicht anschließende zweite Schicht, die von einem isolierenden Material gebildet ist, ist von 100 nm Siliziumaluminiumnitrid gebildet. Eine an die zweite Schicht anschließende dritte Schicht, die von halbleitendem Material gebildet ist, ist von 9 nm Germanium gebildet. Eine auf die dritte Schicht folgende vierte, abschließende Schicht, die von einem isolierenden Material gebildet ist, ist von 50 nm Siliziumaluminiumnitrid gebildet. Die Beschichtung ist dazu vorgesehen, einen edelstahlartigen metallischen Anschein zu erzeugen. Die Beschichtung zusammen mit der Glaseinheit des Kochfeldes weist für den Spektralbereich zwischen 440 nm und 720 nm eine im Wesentlichen konstante Reflektivität von 46 % auf der Seite der Glaseinheit auf. Im L*a*b*-Farbraum liegt eine Farbe der Beschichtung bei L* = 73,8, a* = -5,6, b* = 6,7. Weiterhin weist die Beschichtung eine im Spektralbereich zwischen 440 nm und 730 nm im Wesentlichen konstante Transmissivität von 10 % auf. Licht von LEDs von Anzeigeeinheiten ist somit durch die Beschichtung hindurch sichtbar. Im Vergleich zum vorhergehenden Ausführungsbeispiel kann eine verbesserte Sichtbarkeit von LEDs erreicht werden.

In Figur 8 ist ein Vergleich der Transmissivitäten T3, T4 des dritten und vierten Ausführungsbeispiels gezeigt. Durch eine Anpassung der Anzahl der Schichten, hier eine Erhöhung von zwei auf vier, ist bei gleichbleibender Farbgebung eine Anpassung der Transmissivität T3, T4 möglich. So wurde die Transmissivität im Bereich großer Wellenlängen λ reduziert und im Bereich kleiner Wellenlängen λ vergrößert, wobei sich eine im Wesentlichen konstante Transmissivität ergibt, was zu einer Gleichstellung unterschiedlich emittierender Leuchtelemente führt.

Die beschriebenen, als Vielschichtstruktur ausgebildeten Beschichtungen 16 weisen jeweils eine Dicke zwischen 110 nm und 220 nm auf. In den beschriebenen Ausführungsbeispielen sind halbleitende Ge-Schichten vorgesehen. Vergleichbare Ergebnisse sind auch mit den restlichen vorgenannten Materialien erreichbar.

Weiterhin sind Ausgestaltungen der Beschichtung mit bis zu acht isolierenden Schichten und bis zu drei halbleitenden Schichten denkbar.

**Bezugszeichen**

| | | | |
|---|---|---|---|
| 10 | Kochfeld | 62 | Kontakt |
| 12 | Kochfeldvorrichtung | 64 | Kontakt |
| 14 | Glaseinheit | 66 | Kontakt |
| 16 | Beschichtung | 68 | Kontakt |
| 18 | Schutzbeschichtung | R1 | Reflektivität |
| 20 | Schicht | R2 | Reflektivität |
| 21 | Schicht | R3 | Reflektivität |
| 22 | Schicht | R4 | Reflektivität |
| 23 | Schicht | R5 | Reflektivität |
| 24 | Schicht | T1 | Transmissivität |
| 30 | Sensor | T2 | Transmissivität |
| 31 | Sensor | T3 | Transmissivität |
| 32 | Sensor | T4 | Transmissivität |
| 33 | Sensor | T5 | Transmissivität |
| 34 | Sensor | λ | Wellenlänge |
| 35 | Sensor | | |
| 36 | Sensor | | |
| 37 | Sensor | | |
| 40 | Anzeigeeinheit | | |
| 41 | Anzeigeeinheit | | |
| 42 | Anzeigeeinheit | | |
| 43 | Anzeigeeinheit | | |
| 50 | Markierung | | |
| 52 | Markierung | | |
| 54 | Markierung | | |
| 56 | Markierung | | |
| 60 | Elektronikeinheit | | |

## Patentansprüche

1. Kochfeldvorrichtung, insbesondere Induktionskochfeldvorrichtung, mit zumindest einer Glaseinheit (14) und zumindest einer als Vielschichtstruktur ausgebildeten Beschichtung (16), die auf zumindest einem Teilbereich zumindest einer Hauptfläche der Glaseinheit (14) angeordnet ist und die zumindest zwei Schichten (20, 21, 22, 23, 24) aufweist, wobei zumindest eine der Schichten (21, 23) von zumindest einem halbleitenden Material gebildet ist und die Beschichtung (16) zumindest eine Schicht (22) elektrisch isolierenden Materials aufweist, die zwischen zumindest zwei Schichten (21, 23), die von halbleitendem Material gebildet sind, angeordnet ist, **gekennzeichnet durch** zumindest eine Elektronikeinheit (60), die dazu vorgesehen ist, zumindest eine elektrische Kenngröße zumindest der einen Schicht (21, 23), die von einem halbleitenden Material gebildet ist, zu messen und auszuwerten.

2. Kochfeldvorrichtung nach Anspruch 1, **dadurch gekennzeichnet, dass** die Beschichtung (16) neben der zumindest einen Schicht (21, 23), die von einem halbleitenden Material gebildet ist, lediglich Schichten (20, 21, 22, 23, 24) halbleitenden Materials und/oder isolierenden Materials aufweist.

3. Kochfeldvorrichtung nach einem der vorhergehenden Ansprüche, **dadurch gekennzeichnet, dass** die Glaseinheit (14) als Kochfeldplatteneinheit ausgebildet ist.

4. Kochfeldvorrichtung nach einem der vorhergehenden Ansprüche, **dadurch gekennzeichnet, dass** die Beschichtung (16) eine Dicke von maximal 10 µm aufweist.

5. Kochfeldvorrichtung nach einem der vorhergehenden Ansprüche, **dadurch gekennzeichnet, dass** die Beschichtung (16) dazu vorgesehen ist, einen metallischen Anschein zu erzeugen.

6. Kochfeldvorrichtung nach einem der vorhergehenden Ansprüche, **dadurch gekennzeichnet, dass** die Elektronikeinheit (60) dazu vorgesehen ist, zumindest einen Sicherheitsparameter zu erfassen.

7. Kochfeld, insbesondere Induktionskochfeld, mit zumindest einer Kochfeldvorrichtung (12) nach einem der vorhergehenden Ansprüche.

## Claims

1. Cooktop apparatus, in particular induction cooktop apparatus, having at least one glass unit (14) and at least one coating (16) configured as a multilayer structure, which is disposed on at least one subregion of at least a main face of the glass unit (14) and has the at least two layers (20, 21, 22, 23, 24), wherein at least one of the layers (21, 23) is formed by at least one semiconducting material and the coating (16) has at least one layer (22) of electrically insulating material, which is disposed between at least two layers (21, 23) formed by semiconducting material, **characterised by** at least one electronic unit (60), which is provided to measure and evaluate at least one electrical characteristic at least of the one layer (21, 23) formed by a semiconducting material.

2. Cooktop apparatus according to claim 1, **characterised in that** in addition to the at least one layer (21, 23) formed by a semiconducting material, the coating (16) only has layers (20, 21, 22, 23, 24) of semiconducting material and/or insulating material.

3. Cooktop apparatus according to one of the preceding claims, **characterised in that** the glass unit (14) is designed as a cooktop plate unit.

4. Cooktop apparatus according to one of the preceding claims, **characterised in that** the coating (16) has a thickness of maximum 10 µm.

5. Cooktop apparatus according to one of the preceding claims, **characterised in that** the coating (16) is provided to produce a metallic appearance.

6. Cooktop apparatus according to one of the preceding claims, **characterised in that** the electronic unit (60) is provided to detect at least one safety parameter.

7. Cooktop, in particular induction cooktop, having at least one cooktop apparatus (12) according to one of the preceding claims.

## Revendications

1. Appareil de table de cuisson, en particulier appareil de table de cuisson à induction, comprenant au moins un ensemble de verre (14) et au moins un revêtement (16) réalisé sous forme de structure multicouche, disposé sur au moins une zone partielle d'au moins une surface principale de l'ensemble de verre (14) et qui comprend au moins deux couches (20, 21, 22, 23, 24), au moins une des couches (21, 23) étant formée d'au moins une matière semi-conductrice et le revêtement (16) comprenant au moins une couche (22) de matière électro-isolante, qui est disposée entre au moins deux couches (21, 23), lesquelles sont constituées d'une matière semi-conductrice, **caractérisé par** au moins un bloc électronique (60) prévu pour mesurer et analyser au moins une caractéristique électrique de la au moins une couche (21, 23), constituée d'une matière semi-conductrice.

2. Appareil de table de cuisson selon la revendication 1, **caractérisé en ce que** le revêtement (16) comprend, outre la au moins une couche (21, 23) constituée d'une matière semi-conductrice, uniquement des couches (20, 21, 22, 23, 24) de matières semiconductrices et/ou d'une matière isolante.

3. Appareil de table de cuisson selon l'une des revendications précédentes, **caractérisé en ce que** l'ensemble de verre (14) est réalisé sous forme d'un ensemble de plaque de table de cuisson.

4. Appareil de table de cuisson selon l'une des revendications précédentes, **caractérisé en ce que** le revêtement (16) présente une épaisseur de maximum 10 µm.

5. Appareil de table de cuisson selon l'une des revendications précédentes, **caractérisé en ce que** le revêtement (16) est prévu pour produire une apparence métallique.

6. Appareil de table de cuisson selon l'une des revendications précédentes, **caractérisé en ce que** le bloc électronique (60) est prévu pour collecter au moins un paramètre de sécurité.

7. Table de cuisson, en particulier table de cuisson à induction, comprenant au moins un appareil de table de cuisson (12) selon l'une des revendications précédentes.
